## Europäisches Patentamt
## European Patent Office
## Office européen des brevets

(19)

(11) Veröffentlichungsnummer: **0 071 702**
**B1**

(12)

# EUROPÄISCHE PATENTSCHRIFT

(45) Veröffentlichungstag der Patentschrift:
02.09.87

(51) Int. Cl.⁴: **G 05 B 7/02**, B 60 K 31/00,
G 05 D 13/62

(21) Anmeldenummer: 82104224.9

(22) Anmeldetag: 14.05.82

(54) Einrichtung zur elektrischen Regelung der Geschwindigkeit eines Kraftfahrzeugs.

(30) Priorität: 30.07.81 DE 3130099

(43) Veröffentlichungstag der Anmeldung:
16.02.83 Patentblatt 83/7

(45) Bekanntmachung des Hinweises auf die Patenterteilung:
02.09.87 Patentblatt 87/36

(84) Benannte Vertragsstaaten:
DE FR GB SE

(56) Entgegenhaltungen:
DE-A-2 006 367
DE-A-2 633 102
DE-A-2 646 066
DE-A-2 648 556
DE-B-1 214 103

PATENTS ABSTRACTS OF JAPAN, Band 5, Nr. 34(E-46)(706), 4. März 1981
Buch von W.OPPELT: "Kleines Handbuch technischer Regelungen", Verlag Chemie, 1972, S.363 und 365

(73) Patentinhaber: VDO Adolf Schindling AG,
Gräfstrasse 103, D-6000 Frankfurt/Main (DE)

(72) Erfinder: Collonia, Harald, Zum Talblick 12, D-6246 Glashütten (DE)

(74) Vertreter: Könekamp, Herbert, Dipl.- Ing., Sodener Strasse 9, D-6231 Schwalbach (DE)

EP 0 071 702 B1

## Beschreibung

Die Erfindung bezieht sich auf eine Einrichtung zur elektrischen Regelung der Geschwindigkeit eines Kraftfahrzeugs auf einen vorbestimmten konstanten Wert, nach dem Oberbegriff des Anspruchs 1.

Es ist bereits eine Einrichtung dieser Gattung bekannt (DE-A-26 48 556), bei der das die gewünschte Fahrzeuggeschwindigkeit darstellende Sollwertsignal dadurch gebildet wird, daß das aktuelle Fahrzeuggeschwindigkeitssignal in dem Augenblick in einem setzbaren Speicher durch einen Setzbefehl gespeichert wird, in dem die aktuelle Geschwindigkeit den gewünschten Wert innehat. Die dann von dem setzbaren Speicher über einen Digitalanalogumsetzer abgegebene Spannung ist für den weiteren Verlauf der Regelung das Sollwertsignal. Das Sollwertsignal wird dann an einer ersten Vergleichsstelle mit dem aktuellen Fahrzeuggeschwindigkeitssignal verglichen und in den Regelverstärker eingespeist. Das durch den Regelverstärker gebildete Stellsignal verstellt einen Stellantrieb und eine von dieser angetriebene Drosselklappe so, daß die von dem Sollwertsignal vorgegebene Fahrzeuggeschwindigkeit erreicht bzw. auch unter dem Einfluß von Störgrößen beibehalten wird.

Zum Setzen des Speichers auf das gewünschte Sollwertsignal ist eine zweite Vergleichsstelle vorhanden, die einerseits von dem Geschwindigkeitsistwertsignal und andererseits vom Sollwertsignal angesteuert ist. Zum Einstellen des Sollgeschwindigkeitssignals wird dann das Fahrzeug auf die gewünschte Geschwindigkeit beschleunigt oder abgebremst und nach Erreichen des gewünschten Geschwindigkeitswertes wird ein Tastschalter betätigt. Dies hat ein Löschen und ausschließendes Setzen des Speichers mittels der zweiten Vergleichsstelle bei Äquivalenz ihrer beiden Eingangssignale zur Folge.

Bei dieser bekannten Einrichtung zur elektrischen Regelung der Geschwindigkeit ist nachteilig, daß nach abgeschlossenem Setzvorgang, wenn zwar der gewünschte Sollwert der Geschwindigkeit in der geschilderten Weise in den Speicher eingespeichert ist und der Fahrer die Drosselklappe nicht mehr selbst betätigt, die zu der Fahrzeugsollgeschwindigkeit gehörende Drosselklappenstellung über die aus dem Fahrzeuggeschwindigkeitssignal und dem Sollwert gebildete Regelabweichung, die das Stellsignal bestimmt, eingestellt werden muß. Infolge der bei Proportionalreglern und Regelstrecken mit P-Verhalten grundsätzlich verbleibende Regelabweichung weicht dann die erreichte Fahrzeuggeschwindigkeit von dem eingestellten Sollwert um einen kleinen, aber doch störenden Betrag ab, der insbesondere beim Fahren in einer Kolonne oder bei genau einzuhaltenen Geschwindigkeitsbegrenzungen auffallen kann. Diese bleibende Abweichung könnte durch höhere Regelverstärkung, die aber zu Instabilitäten führen kann, herabgesetzt werden oder durch Regler mit besonderen Zeitverhalten, die jedoch schwieriger zu optimieren sind.

Es sind des weiteren Geschwindigkeitsregeleinrichtungen bekannt (DE-A- 20 06 367), die einen mit der Drosselklappe gekuppelten Stellungsgeber aufweisen, dessen Ausgangssignal zu einer Vergleichsstelle am Eingang des Reglers zurückgeführt ist, um Ungenauigkeiten der Drosselklappeneinstellung durch Reibung oder wechselnde Rückstellkräfte zu vermeiden.

Ferner sind Hand-Automatik-Umschaltungen für Regler bekannt (W. Oppelt, Kleines Handbuch technischer Regelvorgänge, Verlag Chemie, Weinheim/Bergstraße, 1972, S. 363 und 365), um in Regelanlagen von Hand eingreifen zu können, falls der Regler versagen sollte. Im Automatik-Betrieb arbeitet die Regelungsstruktur als normaler Regler mit von Hand einstellbrem Sollwert, während im Handbetrieb die Stellgröße manuell verändert und der Sollwert selbsttätig nachgeführt wird. Dieser letztgenannte Betriebstandard existiert bei Geschwindigkeitsregeleinrichtungen jedoch nicht, so daß derartige Umschaltungen für die vorliegenden Zwecke nicht geeignet sind.

Zu der vorliegenden Erfindung gehört daher die Aufgabe, die Einrichtung zur elektrischen Regelung der Farzeuggeschwindigkeit so weiterzubilden, daß die im Augenblick des Setzvorganges des Speichers vorliegende Fahrzeuggeschwindigkeit auch dann genau beibehalten wird, wenn die Drosselklappenstellung nicht mehr durch Betätigung des Fahrpedals von dem Fahrer bestimmt wird, d. h. die selbsttätige Regelung wirksam wird.

Diese Aufgabe wird durch die in dem kennzeichnenden Teil des Anspruchs 1 angegebenen Maßnahmen gelöst.

Mit der Erfindung wird der wesentliche Vorteil erzielt, daß die Einrichtung direkt, d. h. nicht über den Umweg einer aus der Fahrzeuggeschwindigkeit und dem Sollwert gebildeten Regelabweichung die Drosselklappe in die Stellung einstellt, die sie vor dem Übergang auf automatische Regelung innehatte. Die Einrichtung merkt sich also praktisch die Drosselklappenstellung bei der gewünschten durch die Fahrpedalstellung vorgegebene Geschwindigkeit. Die Einrichtung erzeugt einen Sollwert, der nicht von der aktuellen Fahrzeuggeschwindigkeit während des Setzvorganges abgeleitet ist, sondern bildet diesen Sollwert aus dem Stellsignal und der Drosselklappenstellung. Dieser die Fahrzeugsollgeschwindigkeit praktisch nur mittelbr darstellende Sollwert wird für den selbsttätigen Regelungsvorgang zum Vergleich mit dem aktuellen Fahrzeuggeschwindigkeitssignal verwendet, so daß durch Störgrößen hervorgerufene Geschwindigkeitsänderungen auch hier ausgeregelt werden. Die bei Proportionalreglern und Regelstrecken mit P-Verhalten grundsätzlich verbleibende Regelabweichung wird dadurch sicher vermieden.

Die erfindungsgemäße Einrichtung erfordert nur einen geringfügigen Zusatzaufwand, nämlich im wesentlichen das Vorsehen eines mit der Drosselklappe gekuppelten Stellungsgebers, wobei die Möglichkeit besteht, den mit der Drosselklappe gekuppelten Stellungsgeber konventioneller Einrichtungen zu verwenden bzw. das Signal des Stellungsgebers zusätzlich, wie bekannt, zu einer weiteren Vergleichsstelle am Eingang des Reglers zurückzuführen, um Ungenauigkeiten der Drosselklappeneinstellung zu eliminieren.

In dem kennzeichnenden Teil des Anspruchs 2 ist näher angegeben, wie das Vergleichssignal auf den setzbaren Speicher einwirkt.

Anspruch 3 ergibt die wesentliche Struktur des vorteilhaft verwendeten setzbaren Speichers wieder.

Ein Ausführungsbeispiel der Einrichtung wird im folgenden anhand eines Signalflußbildes erläutert:

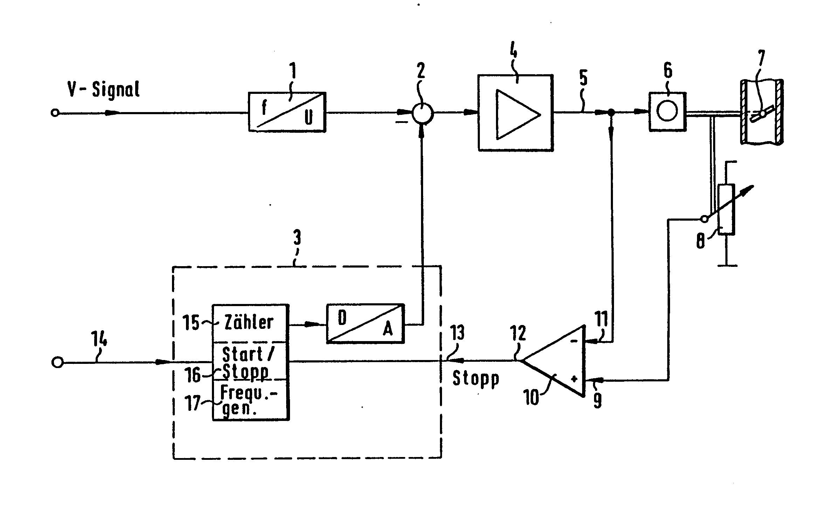

In der Zeichnung ist mit 1 ein Spannungs-Frequenzumsetzer bezeichnet, der ein als Frequenz von einem nicht dargestellten Geber abgegebenes Fahrzeuggeschwindigkeitssignal in eine Spannung umsetzt. Dieses Fahrzeuggeschwindigkeitssignal wird in eine erste Vergleichsstelle 2 eingespeist, die andererseits mit einem Sollwertgeber 3 in Form eines setzbaren Speichers verbunden ist. Der Ausgang der Vergleichsstelle 2 führt zu einem Regelverstärker 4 mit P-Anteil, dessen Aus-gang 5 einen Stellantrieb 6 mit einem Stellsignal speist. Der Stellantrieb dient zur Verstellung einer Drosselklappe 7. Gekuppelt mit der Drosselklappe 7 ist ein Potentiometer als Stellungsgeber 8.

Ein von dem Stellungsgeber 8 abgegebenes Rückführsignal wird in einen ersten Eingang 9 einer zweiten Vergleichsstelle 10 eingespeist, deren zweiter Eingang 11 mit dem Ausgang 5 des Regelverstärkers 4 vebunden ist. Der Ausgang 12 der Vergleichsstelle 10 ist an einen Stoppeingang 13 des setzbaren Speichers angeschlossen, dessen Setzeingang mit 14 bezeichnet ist.

Der setzbare Seicher besteht aus einem Zähler 15, der über eine Start-Stopp-Einrichtung 16 von einem Frequenzgenerator 17 gespeist wird. Der Zählerausgang ist an einen Digital-Analog-Umsetzer 18 angeschlossen, der das Sollwertsignal als Analogsignal abgibt.

Wenn mit der dargestellten Einrichtung auf automatische Regelung der Fahrzeuggeschwindigkeit von der Steuerung der Geschwindigkeit durch den Fahrer übergegangen wird, gibt der Fahrer einen Setzbefehl in den Setzeingang 14 des Sollwertgebers 3. Dadurch beginnt der Zähler 15 durch den Frequenzgenerator 17 gespeist von Null hochzuzählen. Der Zählvorgang wird gestoppt, wenn von der Vergleichsstelle 10 ein entsprechendes Stoppsignal in den Stoppeingang 13 eingespeist wird.

Dieses Stoppsignal wird gebildet, wenn das von dem Regelverstärker 4 an dem Ausgang 5 abgegebene Stellsignal am Eingang 11 der Vergleichsstelle 10 gleich dem Signal des Stellungsgebers 8 am Eingang 9 ist. Dies bedeutet, daß so lange ein Stellsignal 5 integriert wird, bis das Stellsignal der Stellung des Stellungsgebers 8 entspricht, die vorlag, als beim Setzen die Drosselklappe noch durch den Fahrer in der für die gewünschte Geschwindigkeit erforderlichen Stellung gehalten wurde. Es erfolgt somit ein stufenloser übergang der Geschwindigkeit von dem durch den Fahrer gesteuerten Betrieb in den Betrieb der automatischen Regelung. Bei der automatischen Regelung wird der Sollwert, der von dem Rückführsignal im Augenblick des Setzens des Speichers abgeleitet wurde, mit dem Geschwindigkeitssignal aus dem Spannungsfrequenzumsetzer 1 verglichen, und es werden Geschwindigkeitsänderungen, die durch Gefälle, Belastungen oder andere Störgrößen hervorgerufen werden, durch den Regelverstärker 4 ausgeregelt.

## Patentansprüche

1. Einrichtung zur elektrischen Regelung der Geschwindigkeit eines Kraftfahrzeugs auf einen vorbestimmten konstanten Wert, mit einem als setzbaren Speicher ausgebildeten Sollwertgeber (3), mit einer mit dem Sollwertsignal und einem Fahrzeuggeschwindigkeitsignal gespeisten ersten Vergleichsstelle (2), die mit einem nachgeschalteten Regelverstärker (4) einen Regler bildet, der ein Stellsignal an einen Stellantrieb (6) zur Verstellung einer Drosselklappe (7) oder eines das Kraftstoffluftgemisch eines Verbrennungsmotors steuernden Organs abgibt, und mit einer zweiten Vergleichsstelle (10) zum Setzen des Speichers, wenn dieser nach einem Startsignal den dem vorbestimmbaren konstanten Geschwindigkeitswert entsprechenden Wert erreicht hat, dadurch gekennzeichnet, daß mit der Drosselklappe (7) ein Stellungsgeber (8) gekuppelt ist, und daß der erste Eingang (9) der zweiten Vergleichsstelle (10) mit dem Ausgang des Stellungsgebers (8) und der zweite Eingang (11) mit dem Ausgang des Regelverstärkers (4) in Verbindung stehen.

2. Einrichtung nach Anspruch 1, dadurch gekennzeichnet, daß der Ausgang der zweiten Vergleichsstelle (10) an einen Stopp-Eingang (13) des setzbaren Speichers angeschlossen ist, durch den ein die Führungsgröße bildender Integrations- oder Zählvorgang in dem setzbaren Speicher abstoppbar ist.

3. Einrichtung nach Anspruch 1 oder 2, dadurch gekennzeichnet, daß der setzbare Speicher einen von einem Frequenzgenerator (17) gespeisten Zähler (15) mit einer Start/Stoppeinrichtung (16) umfaßt, die einerseits mit dem Stopp-Eingang (13) und andererseits mit einem mit einem Setzbefehl beaufschlagbaren Setzeingang (14) verbunden ist, und daß von dem Zähler über einen Digitalanalogumsetzer (18) das Sollwertsignal ableitbar ist.

## Claims

1. Device for regulating the speed of a motor vehicle electrically to a predetermined constant value, with a desired-value signal emitter (3) constructed as a settable store, with a first comparison station (2) which is supplied with the desired-value signal and a vehicle speed signal, and which with a control amplifier (4) connected to its output side forms a controller which delivers a regulating signal to a regulating drive (6) for adjustment of a throttle valve (7) or of a device controlling the fuel-air mixture of an internal combustion engine, and with a second comparison station (10) for setting the store when the latter, after a start signal, has reached the value corresponding to the predeterminable constant speed value, characterised in that a position signal emitter (8) is coupled with the throttle valve (7), and that the first input (9) of the second comparison station (10) is connected to the output of the position signal emitter (8) and the second input (11) is connected to the output of the control amplifier (4).

2. Device according to claim 1, characterised in that the output of the second comparison station (10) is connected to a stop input (13) of the settable store whereby an integration or counting operation occurring in the settable store and forming the command variable can be stopped.

3. Device according to claim 1 or 2, characterised in that the settable store comprises a counter (15) supplied by a frequency generator (17) and having a start/stop device (16) which is connected on the one hand to the stop input (13) and on the other hand to a setting input (14) to which a setting command can be fed, and that the desired-value signal can be derived from the counter via a digital to analog converter (18).

## Revendications

1. Dispositif pour régler électriquement la vitesse d'un véhicule automobile à une valeur constante prédéterminée, comprenant un indicateur (3) de valeur(s) de consigne réalisé sous la forme d'une mémoire positionnable, un premier étage comparateur (2) qui est alimenté par le signal de valeur de consigne et par un signal de vitesse du véhicule et forme, avec un amplificateur (4) de réglage branché en aval, un régulateur délivrant un signal de réglage à un servo-entraînement (6), en vue de l'ajustement d'un papillon (7) d'étranglement ou d'un organe commandant le mélange carburant-air d'un moteur à combustion interne, ainsi qu'un second étage comparateur (10) destiné à positionner la mémoire lorsque cette dernière, après un signal de départ, a atteint la valeur correspondant à la valeur constante prédéterminable de la vitesse, caractérisé par le fait qu'un indicateur (8) de position(s) est couplé au papillon (7) d'étranglement; et par le fait que la première entrée (9) du second étage comparateur (10) est raccordée à la sortie de l'indicateur (8) de position(s) et sa seconde entrée (11) est raccordée à la sortie de l'amplificateur (4) de réglage.

2. Dispositif selon la revendication 1, caractérisé par le fait que la sortie du second étage comparateur (10) est raccordée à une entrée (13) d'arrêt de la mémoire positionnable, par l'intermédiaire de laquelle il peut être mis fin, dans cette mémoire positionnable, à un processus d'intégration ou de comptage formant la grandeur directrice.

3. Dispositif selon la revendication 1 ou 2, caractérisé par le fait que la mémoire positionnable englobe un compteur (15) alimenté par un générateur (17) de fréquence(s)et muni d'un dispositif (16) de marche/arrêt qui est raccordé, d'une part, à l'entrée (13) d'arrêt et, d'autre part, à une entrée (14) de positionnement pouvant recevoir une instruction de positionnement; et par le fait que le signal de valeur de consigne peut être dérivé du compteur, par l'intermédiaire d'un convertisseur numérique/analogique (18).

V - Signal

Stopp

Zähler

Start / Stopp

Frequ.- gen.